# EUROPEAN PATENT APPLICATION

(11) **EP 1 975 913 A2**
(43) Date of publication of application: **01.10.2008**
(21) Application number: 08005420.8
(22) Date of filing: 22.03.2008
(51) Int. Cl.: G09G 3/36

(54) **Circuit board and liquid crystal display including the same**

(30) Priority: 30.03.2007 US 909014 P; 30.03.2007 KR 20070031671
(71) Applicant: Samsung Electronics Co., Ltd., Suwon-si, Gyeonggi-do 442-742 (KR)
(72) Inventor: Park, Jin-kyu, Gangnam-gu Seoul (KR); Park, Dong-won, Cheonan-si Chungcheongnam-do (KR); Lee, Sang-keun, Tangjeong-myeon Asan-si Chungcheongnam-do (KR)
(74) Representative: Dr. Weitzel & Partner

(57) **Abstract**

A liquid crystal display ("LCD") (10) includes a circuit board (200) including a first connector (400) which receives a data signal and a second connector (500) which is separated from the first connector (400) and receives a power supply voltage, a timing controller (300) mounted on the circuit board, the timing controller (300) receiving the power supply voltage from the second connector (500) and the data signal from the first connector (400), and processing the data signal received from the first connector (400), and a liquid crystal panel (100) displaying an image using the data signal processed by the timing controller (300).

## Description

### BACKGROUND OF THE INVENTION

### 1. Field of the Invention

The present invention relates to a circuit board and a liquid crystal display ("LCD") including the same, and more particularly, to a circuit board and an LCD including the same which can reduce production costs.

### 2. Description of the Related Art

A liquid crystal display ("LCD") includes a first display plate having a plurality of pixel electrodes, a second display plate having a common electrode, and a liquid crystal panel having a dielectrically anisotropic liquid crystal layer injected between the first and second display plates. The LCD displays a desired image by forming an electric field between the pixel electrodes and the common electrode, adjusting the intensity of the electric field, and thus controlling the amount of light transmitting through the liquid crystal panel. Since the LCD is not a self light-emitting display, it includes a backlight unit on a rear surface of the liquid crystal panel so that the backlight unit can serve as a light source.

In order to drive the LCD, the liquid crystal panel, driving integrated circuits ("ICs"), which transmit signals required to display an image, the backlight unit, an inverter, a power supply module, which provides a power supply voltage required to drive the LCD, and an external transmission cable, which transmits an image signal, must be electrically connected to one another.

The above modules can be electrically connected to one another using a plurality of wirings, a plurality of connectors, and a printed circuit board ("PCB"). However, the use of the wirings, the connectors, or the PCB increases the production costs of the LCD.

### BRIEF SUMMARY OF THE INVENTION

The present invention provides a circuit board which can reduce production costs.

The present invention also provides a liquid crystal display ("LCD") which can reduce production costs.

According to exemplary embodiments of the present invention, a circuit board includes a first connector delivering a data signal, a second connector separated from the first connector and delivering a power supply voltage, and a timing controller coupled to the first and second connectors, the timing controller receiving the power supply voltage from the second connector and the data signal from the first connector, and processing the data signal received from the first connector.

According to other exemplary embodiments of the present invention, an LCD includes a circuit board including a first connector which receives a data signal and a second connector which is separated from the first connector and receives a power supply voltage, a timing controller mounted on the circuit board, the timing controller receiving the power supply voltage from the second connector and the data signal from the first connector, and processing the data signal received from the first connector, and a liquid crystal panel displaying an image using the data signal processed by the timing controller.

According to still other exemplary embodiments of the present invention, an LCD includes a power supply module receiving an external voltage and generating a power supply voltage, a transmission cable including a main link which transmits a data signal and an auxiliary channel which transmits a monitor control command set ("MCCS"), a circuit board including a first connector and a second connector which is separated from the first connector, a timing controller mounted on the circuit board, receiving the power supply voltage through the second connector, and processing the data signal and the MCCS received through the first connector; and a liquid crystal panel displaying an image using the data signal processed by the timing controller, wherein the first connector is connected to the transmission cable, and the second connector is connected to the power supply module.

### BRIEF DESCRIPTION OF THE DRAWINGS

The above and other features and advantages of the present invention will become more apparent by describing in detail exemplary embodiments thereof with reference to the attached drawings in which:
FIG. 1 is a block diagram showing an exemplary circuit board and an exemplary liquid crystal display ("LCD") including the same according to an exemplary embodiment of the present invention;
FIG. 2 is a front view of the exemplary LCD illustrated in FIG. 1;
FIGS. 3A and 3B are a perspective view and a cross-sectional view, respectively, showing an exemplary first connector and an exemplary transmission cable illustrated in FIG. 1;
FIG. 4 is a table showing the exemplary pin structure of the exemplary first connector illustrated in FIG. 1;
FIG. 5 is a table showing the exemplary pin structure of an exemplary second connector illustrated in FIG. 2; and
FIG. 6 is a block diagram showing an exemplary circuit board and an exemplary LCD including the same according to another exemplary embodiment of the present invention.

### DETAILED DESCRIPTION OF THE INVENTION

The present invention will now be described more fully with reference to the accompanying drawings, in which exemplary embodiments of the invention are shown. The invention may, however, be embodied in many different forms and should not be construed as being limited to the embodiments set forth herein; rather, these embodiments are provided so that this disclosure will be thorough and complete, and will fully convey the concept of the invention to those skilled in the art. Like reference numerals in the drawings denote like elements, and thus their description will be omitted.

It will be understood that when an element is referred to as being "on" another element, it can be directly on the other element or intervening elements may be present therebetween. In contrast, when an element is referred to as being "directly on" another element, there are no intervening elements present. As used herein, the term "and/or" includes any and all combinations of one or more of the associated listed items. It will be understood that, when an element is referred to as being "coupled" to another element, it is electrically coupled to the other element.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of the present invention.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Spatially relative terms, such as "beneath", "below", "lower", "above", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

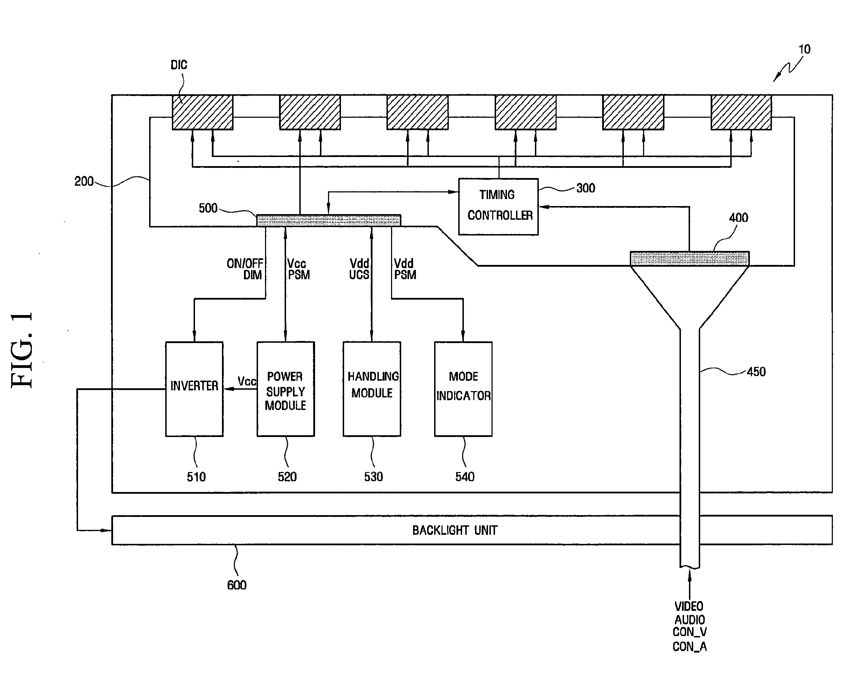

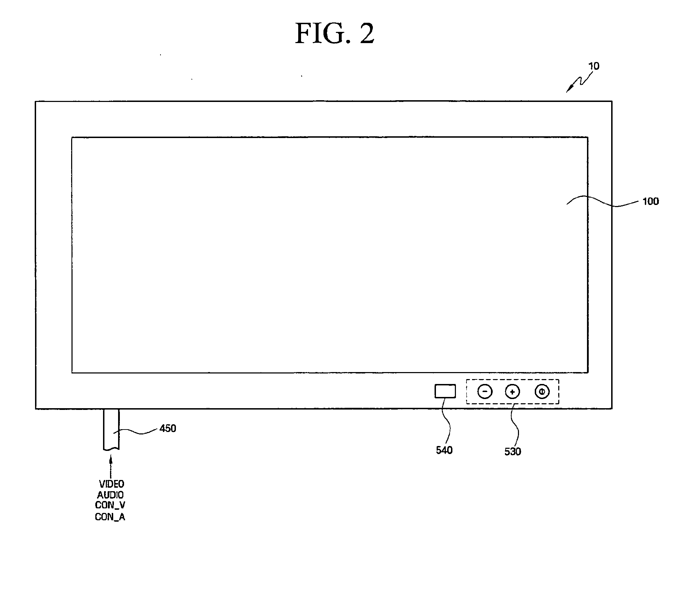

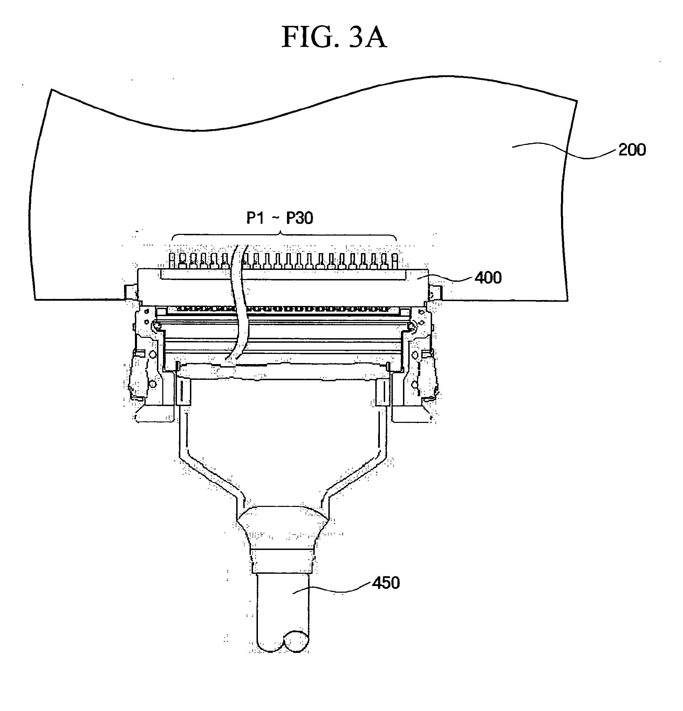

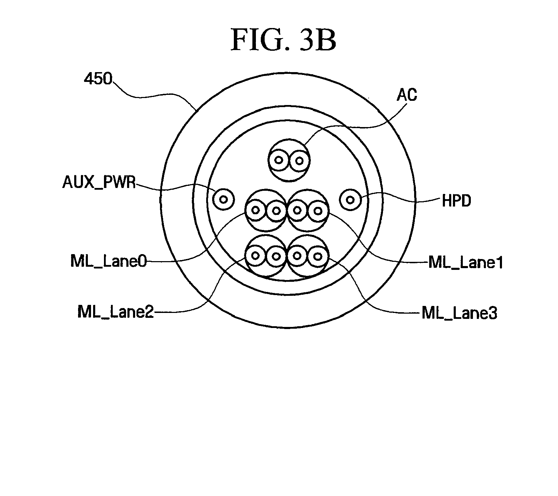

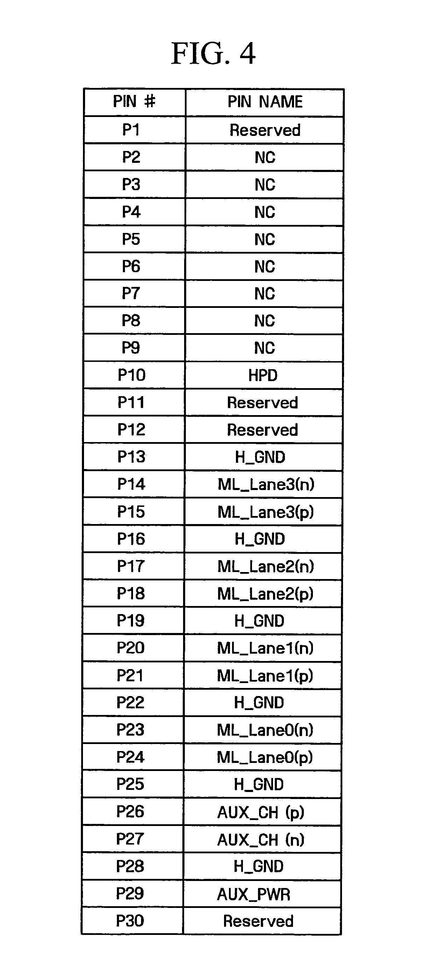

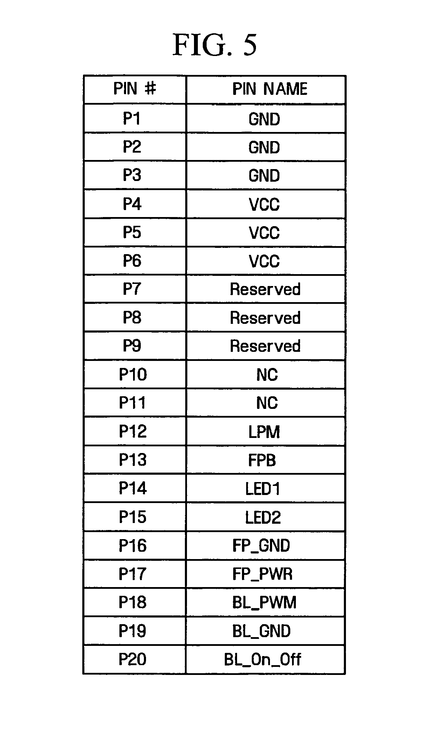

Hereinafter, an exemplary circuit board and an exemplary liquid crystal display ("LCD") including the same according to an exemplary embodiment of the present invention will be described with reference to FIGS. 1 through 5. FIG. 1 is a block diagram showing a circuit board 200 and an LCD 10 including the same according to an exemplary embodiment of the present invention. FIG. 2 is a front view of the LCD 10 illustrated in FIG. 1. FIGS. 3A and 3B are a perspective view and a cross-sectional view, respectively, showing a first connector 400 and a transmission cable 450 illustrated in FIG. 1. FIG. 4 is a table showing the pin structure of the first connector 400 illustrated in FIG. 1. FIG. 5 is a table showing the pin structure of a second connector 500 illustrated in FIG. 2.

Referring to FIG. 1, the LCD 10 receives, through the first connector 400, a data signal and/or a control signal, which are output from an external host device (not shown). Modules included in the LCD 10, such as a timing controller 300, an inverter 510, a power supply module 520, a handling module 530 and a mode indicator 540, are electrically connected to one another by the second connector 500. That is, the modules included in the LCD 10 are connected to the second connector 500 and thus interface with one another through the second connector 500, and the LCD 10 interfaces with an external device (not shown) through the first connector 400. Since the connection structure of the modules is simplified as described above, the production costs of the LCD 10 can be reduced.

More specifically, referring to FIGS. 1 and 2, the LCD 10 may include a liquid crystal panel 100, the circuit board 200, a gate driver (not shown), a data driver DIC, the inverter 510, the power supply module 520, the handling module 530, the mode indicator 540, and a backlight unit 600.

The liquid crystal panel 100 includes a plurality of gate lines (not shown), a plurality of data lines (not shown) and a plurality of pixels (not shown) formed at intersections of the gate lines and the data lines, and displays an image using the gate lines, the data lines, and the pixels.

In order to display an image, the gate driver and the data driver DIC are connected to the liquid crystal panel 100 and provide a gate signal and an image signal, respectively. In FIG. 1, the data driver DIC is connected to the liquid crystal panel 100 in the form of an integrated circuit ("IC"), and the gate driver is mounted on the liquid crystal panel 100. However, the forms of the data driver DIC and the gate driver are not limited thereto, and the data driver DIC and the gate driver may be alternatively mounted on or connected to the liquid crystal panel 100.

The timing controller 300 and circuits (not shown) generating various signals for driving the LCD 10 are mounted on the circuit board 200. The circuit board 200 includes a plurality of wirings electrically connecting the timing controller 300, the data driver DIC, and the circuits (not shown) to one another. In addition, the circuit board 200 includes the first connector 400 and the second connector 500.

The first connector 400 is connected to the transmission cable 450 transmitting the data signal and/or the control signal which are output from the external host device (not shown) such as a computer. The data signal may be an image data signal VIDEO, an audio data signal AUDIO, or a combination thereof. The control signal may be an image control signal CON_V or an audio control signal CON_A. The image control signal CON_V may control luminance of an image, and the audio control signal CON_A may control volume. Alternatively, the control signal may be a monitor control command set ("MCCS") standardized by the Video Electronics Standards Association ("VESA"). That is, the data signal and the control signal may be signals used in DisplayPort which is a digital display interface standard put forth by the VESA, and a detailed description thereof will be omitted here. The first connector 400 and the transmission cable 450 will be described in more detail below with reference to FIGS. 3A, 3B, and 4.

The timing controller 300 processes the data signal (i.e., the image data signal VIDEO and/or the audio data signal AUDIO) and/or the control signal (i.e., the image control signal CON_V or the audio control signal CON_A) received through the first connector 400. When the timing controller 300 transmits the processed data signal to the data driver DIC and the gate driver, an image is displayed on the liquid crystal panel 100 by the data driver DIC and the gate driver.

The second connector 500 is connected to the modules of the LCD 10 so that the modules can interface with one another through the second connector 500.

Specifically, the power supply module 520 is connected to the second connector 500. The power supply module 520 receives an external voltage, e.g., an alternating current ("AC") voltage, and generates a power supply voltage Vcc; e.g., 5 V of direct current ("DC") voltage, used in each module of the LCD 10. The power supply module 520 applies the power supply voltage Vcc to the timing controller 300, the data driver DIC and other circuits, which are mounted on the circuit board 200, through the second connector 500. That is, the power supply voltage Vcc may be input to the circuit board 200 through the second connector 500, but not through the first connector 400. The power supply voltage Vcc generated by the power supply module 520 may not be applied directly to the timing controller 300, the data driver DIC, and other circuits. Alternatively, the power supply voltage Vcc may be converted into another voltage by a voltage converter (not shown) and then applied to the timing controller 300, the data driver DIC, and other circuits.

The power supply module 520 may interface with the timing controller 300 through the second connector 500. For example, the timing controller 300 may transmit a power saving mode signal PSM to the power supply module 520 through the second connector 500. When the LCD 10 cannot operate normally or when an image displayed on the liquid crystal panel 100 remains unchanged for more than a predetermined period of time, the power saving mode signal PSM may be used to block the supply of the power supply voltage Vcc to the backlight unit 600 in order to reduce power consumption. That is, during normal operation, the power supply module 520 may generate the power supply voltage Vcc for driving the backlight unit 600. However, when receiving the power saving mode signal PSM through the second connector 500, the power supply module 520 may withhold application of the power supply voltage Vcc to the backlight unit 600.

The inverter 510 may be connected to the second connector 500 and interface with the timing controller 300 through the second connector 500. For example, the timing controller 300 may transmit a backlight on/off signal ON/OFF and a dimming signal DIM, for controlling on/off and luminance of the backlight unit 600, to the inverter 510 through the second connector 500. The dimming signal DIM may be a pulse width modulation ("PWM") signal. If the dimming signal DIM is a digital signal, the inverter 510 may include a circuit converting the digital dimming signal DIM into a PWM signal. That is, the inverter 510 may receive the backlight on/off signal ON/OFF and the dimming signal DIM through the second connector 500 and control the on/off and luminance of the backlight unit 600.

The handling module 530 may be connected to the second connector 500 and interface with the timing controller 300 through the second connector 500. The handling module 530 may be implemented in the form of user operable control mechanisms, such as buttons, on a front surface of the LCD 10 as illustrated in FIG. 2 and may generate a user command signal UCS according to a user's handling. The handling module 530 transmits the user command signal UCS to the timing controller 300 through the second connector 500. The user command signal UCS may be a signal commanding the on/off of the backlight unit 600, controlling the luminance of the backlight unit 600, or adjusting the size and contrast of an image displayed on the liquid crystal panel 100. The timing controller 300 converts the user command signal UCS, transmitted through the second connector 500, into the backlight on/off signal ON/OFF or the dimming signal DIM and transmits the backlight on/off signal ON/OFF or the dimming signal DIM to the inverter 510 through the second connector 500. The user command signal UCS is not limited to the above examples and may be used for various purposes. A power supply voltage Vdd for driving the handling module 530 may be applied to the handling module 530 through the second connector 500. That is, a voltage converter circuit may be mounted on the circuit board 200. The voltage converter circuit may receive the power supply voltage Vcc from the power supply module 520 through the second connector 500, convert the level of the power supply voltage Vcc, and provide the power supply voltage Vdd, which is generated as a result of converting the level of the power supply voltage Vcc, to the handling module 530 through the second connector 500.

The mode indicator 540 may be connected to the second connector 500 and interface with the timing controller 300 through the second connector 500. For example, the mode indicator 540 may be a mode display module and may receive the power saving mode signal PSM from the timing controller 300 through the second connector 500 and indicate that the LCD 10 is in a power saving mode. Specifically, the mode indicator 540 may include a light-emitting diode ("LED") and represent a normal mode or the power saving mode using the color of the LED. The power supply voltage Vdd for driving the mode indicator 540 may be applied to the mode indicator 540 through the second connector 500.

In summary, the modules, such as the inverter 510, the power supply module 520, the handling module 530, and the mode indicator 540, are each connected to the second connector 500. Therefore, each of the modules can interface with the timing controller 300, which is also connected to the second connector 500. The structure of the second connector 500 will be described below with reference to FIG. 5.

The first connector 400 and the transmission cable 450 illustrated in FIG. 1 will now be described in further detail with reference to FIGS. 3A, 3B, and 4. Hereinafter, a case where the first connector 400 is a 30-pin connector and the transmission cable 450 is a cable used in DisplayPort will be described as an example. However, the present invention is not limited to this example, and alternative embodiments of the first connector 400 and the transmission cable 450 would also be within the scope of these embodiments.

Referring to FIGS. 3A and 3B, the transmission cable 450 is connected to the first connector 400. The transmission cable 450 may include four pairs of main links ML_Lane0, ML_Lane1, ML_Lane2 and ML_Lane3, a pair of auxiliary channels AUX, a hot plug detect line HPDL, and an auxiliary power line AUX_PWR. As described above, the data signal may be transmitted through the main links ML_Lane0, ML_Lane1, ML_Lane2 and ML_Lane3, and the MCCS may be transmitted through the auxiliary channels AUX. The transmission cable 450 is connected to each of first through thirtieth pins P1 through P30 of the first connector 400 as illustrated in FIGS. 3A and 4.

Referring to FIG. 4, the second through ninth pins P2 through P9 are no-connect pins NC. The tenth pin P 10 is a hot plug detect pin HPD and is connected to the hot plug detect line HPDL of the transmission cable 450. The thirteenth pin P13, the sixteenth pin P16, the nineteenth pin P19, the twenty-second pin P22, the twenty-fifth pin P25, and the twenty-eighth pin P28 are ground pins H_GND, and a ground voltage for the main links ML_Lane0, ML_Lane1, ML_Lane2 and ML_Lane3 is applied to the thirteenth pin P13, the sixteenth pin P16, the nineteenth pin P 19, the twenty-second pin P22, the twenty-fifth pin P25, and the twenty-eighth pin P28. The twenty-ninth pin P29 is an auxiliary power pin AUX_PWR and is connected to the auxiliary power line AUX_PWR of the transmission cable 450. The first pin P1, the eleventh pin P11, the twelfth pin P12, and the thirtieth pin P30 are reserved pins Reserved, which can be used later by the VESA. The fourteenth pin P14, the fifteenth pin P 15, the seventeenth pin P 17, the eighteenth pin P18, the twentieth pin P20, the twenty-first pin P21, the twenty-third pin P23, and the twenty-fourth pin P24 are main link lane pins ML_Lane3(n), ML_Lane3(p), ML_Lane2(n), ML_Lane2(p), ML_Lane1(n), ML_Lane1(p), ML_Lane0(n), ML_Lane0(p), and form pairs. Pairs of the fourteenth pin P 14, the fifteenth pin P 15, the seventeenth pin P 17, the eighteenth pin P 18, the twentieth pin P20, the twenty-first pin P21, the twenty-third pin P23, and the twenty-fourth pin P24 are respectively connected to the four pairs of the main links ML_Lane3, ML_Lane2, ML_Lane1 and ML_Lane0 of the transmission cable 450. The twenty-sixth pin P26 and the twenty-seventh pin P27 are auxiliary channel pins AUX_CH(n) and AUX_CH(p) and are connected to the pair of auxiliary channels AUX of the transmission cable 450. That is, the first connector 400 delivers the data signal and/or the control signal provided by the external host device (not shown) to an internal portion, e.g., the timing controller 300, of the LCD 10. In the exemplary embodiment, the power supply voltage Vcc may not be input through the first connector 400.

The second connector 500 illustrated in FIG. 1 will now be described in detail with reference to FIG. 5. Hereinafter, a case where the second connector 500 is a 20-pin connector will be described as an example. However, the present invention is not limited to this example, and alternative embodiments of the second connector 500 would also be within the scope of these embodiments.

Referring to FIG. 5, first through third pins P1 through P3 are ground pins GND, and a ground voltage is applied to the first through third pins P1 through P3. Fourth through sixth pins P4 through P6 are power supply pins VCC and are connected to the power supply module 520. The power supply voltage Vcc is applied to the fourth through sixth pins P4 through P6 of the second connector 500 from the power supply module 520. Seventh through ninth pins P7 through P9 are reserved pins Reserved, which can be used later by the VESA. Tenth and eleventh pins P10 and P11 are no-connect pins NC. A twelfth pin P12 is a low power mode pin LPM. The power saving mode signal PSM output from the timing controller 300 is transmitted to the twelfth pin P12, and the twelfth pin P12 is connected to the power supply module 520. A thirteenth pin P13 is a front panel button pin FPB. The thirteenth pin P13 is connected to the handling module 530, and the user command signal UCS output from the handling module 530 is transmitted to the thirteenth pin P13. Fourteenth and fifteenth pins P14 and P15 are LED pins LED1 and LED2. The fourteenth and fifteenth pins P 14 and P15 are connected to the mode indicator 540, and the power saving mode signal PSM from the timing controller 300 is transmitted to the fourteenth and fifteenth pins P14 and P15 of the second connector 500. A sixteenth pin P 16 is a front panel ground pin FP_GND, and a ground voltage for driving the handling module 530 and the mode indicator 540 is applied to the sixteenth pin P16. A seventeenth pin P17 is a front panel power pin FP_PWR and is connected to the handling module 530 and the mode indicator 540. The power supply voltage Vdd for driving the handling module 530 and the mode indicator 540 is applied to the seventeenth pin P17. An eighteenth pin P18 is a dimming pin BL_PWM and is connected to the inverter 510. A dimming signal DIM, for example, the PWM signal, is transmitted to the eighteenth pin P18. A nineteenth pin P19 is a backlight ground pin BL_GND and is connected to the inverter 510. A ground voltage for driving the inverter 510 is applied to the nineteenth pin P 19. A twentieth pin P20 is a backlight on/off pin BL_On_Off and is connected to the inverter 510. The backlight on/off signal ON/OFF is transmitted to the twentieth pin P20. Thus, the second connector 500 may be a connector used for the interface between the modules mounted on the circuit board 200 and modules not mounted on the circuit board 200, and as an interface between modules included in the LCD 10.

The LCD 10 may interface with the external host device (not shown) through the first connector 400, and the modules included in the LCD 10 may interface with one another through the second connector 500. Such a connection structure of the modules can reduce the production costs of the LCD 10.

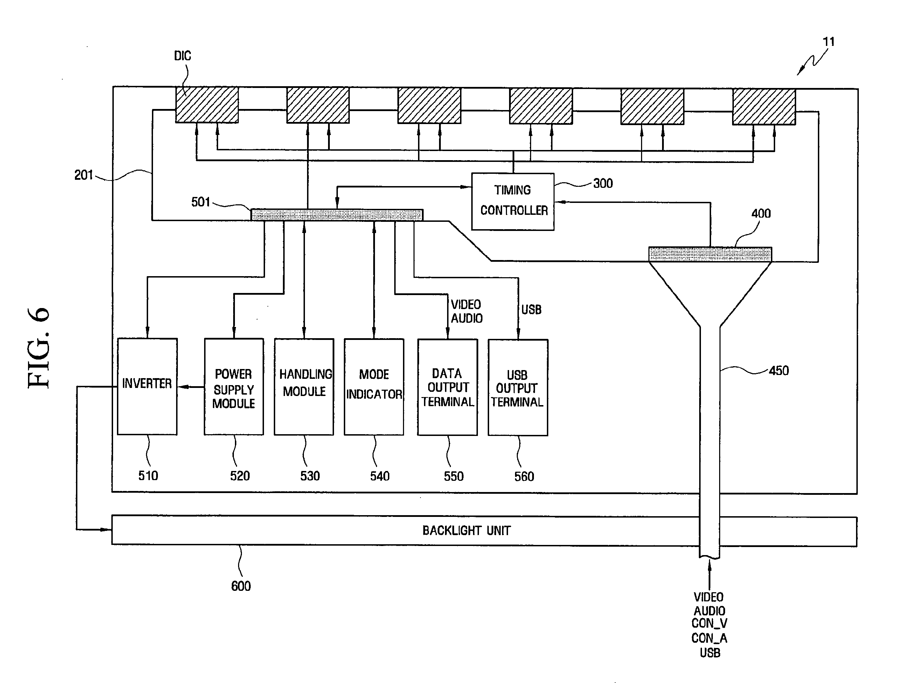

An exemplary circuit board and an exemplary LCD including the same according to another exemplary embodiment of the present invention will now be described with reference to FIG. 6. FIG. 6 is a block diagram showing a circuit board 201 and an LCD 11 including the same according to another exemplary embodiment of the present invention. Elements having the same functions or substantially the same functions as those illustrated in FIG. 1 are indicated by like reference numerals, and thus repetitive description will be omitted.

Referring to FIG. 6, unlike in the previous exemplary embodiment, the LCD 11 further includes a data output terminal 550 and a universal serial bus ("USB") output terminal 560. That is, a second connector 501 of the circuit board 201 is connected to the data output terminal 550 and the USB output terminal 560, in addition to the other modules as previously described.

Specifically, the data output terminal 550 is connected to the second connector 501. The data output terminal 550 receives a data signal processed by the timing controller 300 through the second connector 501 and outputs the data signal to an external destination. For example, the data signal provided by the transmission cable 450 includes an image data signal VIDEO and an audio data signal AUDIO. The timing controller 300 may process the audio data signal AUDIO and/or the image data signal VIDEO and transmit the processed audio data signal AUDIO and/or the processed image data signal VIDEO to the data output terminal 550 through the second connector 501. The data output terminal 550 may be connected to an audio device such as a speaker, an earphone, or a headphone, or to a video device.

The USB output terminal 560 is connected to the second connector 501. The USB output terminal 560 receives a USB signal USB processed by the timing controller 300 through the second connector 501 and outputs the USB signal USB to the external destination. For example, the USB signal USB may be transmitted from an external source to the timing controller 300. Then, the timing controller 300 may process the USB signal USB and provide the processed USB signal USB to the USB output terminal 560 through the second connector 501. The USB output terminal 560 may be connected to a USB memory.

Thus, the modules included in the LCD 11 can interface with one another through the second connector 501. In addition, the LCD 11 can interface with external devices, such as a speaker and a USB memory, through the second connector 501.

As described above, according to a circuit board and an LCD including the same according to the present invention, since the connection structure of modules included in the LCD is simplified, the production costs of the LCD can be reduced. A method of reducing production costs of the LCD is also made possible.

While the present invention has been particularly shown and described with reference to exemplary embodiments thereof, it will be understood by those of ordinary skill in the art that various changes in form and detail may be made therein without departing from the spirit and scope of the present invention as defined by the following claims. The exemplary embodiments should be considered in descriptive sense only and not for purposes of limitation.

## Claims

1. A liquid crystal display comprising:
a circuit board comprising a first connector which receives a data signal and a second connector which is separated from the first connector and receives a power supply voltage;
a timing controller mounted on the circuit board, the timing controller receiving the power supply voltage from the second connector and the data signal from the first connector, and processing the data signal received from the first connector; and
a liquid crystal panel displaying an image using the data signal processed by the timing controller.

2. The liquid crystal display of claim 1, wherein the power supply voltage is not input to the circuit board through the first connector.

3. The liquid crystal display of claim 2, further comprising a power supply module connected to the second connector, the power supply module receiving an external voltage, generating the power supply voltage, and applying the power supply voltage to the circuit board through the second connector.

4. The liquid crystal display of claim 3, further comprising a backlight unit providing light to the liquid crystal panel, wherein the power supply module does not apply the power supply voltage to the backlight unit when the power supply module receives a power saving mode signal, which is output from the timing controller, through the second connector.

5. The liquid crystal display of claim 1, further comprising:
a backlight unit providing light to the liquid crystal panel; and
an inverter connected to the second connector, the inverter receiving a backlight on/off signal and a dimming signal, which are output from the timing controller through the second connector, and the inverter controlling on/off and luminance of the backlight unit.

6. The liquid crystal display of claim 1, further comprising a handling module connected to the second connector, the handling module generating a user command signal according to a user's handling, and transmitting the user command signal to the timing controller through the second connector.

7. The liquid crystal display of claim 1, further comprising a mode indicator connected to the second connector, the mode indicator receiving a power saving mode signal, which is output from the timing controller through the second connector, and indicating that the liquid crystal display is in a power saving mode.

8. The liquid crystal display of claim 1, further comprising a data output terminal connected to the second connector, the data output terminal receiving the data signal processed by the timing controller through the second connector, and outputting the data signal to an external destination.

9. The liquid crystal display of claim 8, further comprising a transmission cable which is connected to the first connector and comprises a main link transmitting the data signal and an auxiliary channel transmitting a control signal, wherein the data signal comprises an image data signal and an audio data signal, and the control signal comprises a monitor control command set.

10. The liquid crystal display of claim 1, further comprising a universal serial bus output terminal connected to the second connector, the universal serial bus output terminal receiving a universal serial bus signal from the timing controller through the second connector, and outputting the universal serial bus signal to an external destination.

11. The liquid crystal display of claim 1, wherein the first connector and the second connector are each multiple pin connectors.

12. The liquid crystal display of claim 1, wherein the second connector is connected to a plurality of modules, and the plurality of modules interface with the timing controller through the second connector.

13. A liquid crystal display comprising:
a power supply module receiving an external voltage and generating a power supply voltage;
a transmission cable comprising a main link which transmits a data signal and an auxiliary channel which transmits a monitor control command set;
a circuit board comprising a first connector and a second connector which is separated from the first connector;
a timing controller mounted on the circuit board, receiving the power supply voltage through the second connector, and processing the data signal and the monitor control command set received through the first connector; and
a liquid crystal panel displaying an image using the data signal processed by the timing controller,
wherein the first connector is connected to the transmission cable, and the second connector is connected to the power supply module.

14. The liquid crystal display of claim 13, wherein the power supply voltage is not input to the circuit board through the first connector.

15. The liquid crystal display of claim 13, further comprising:
a backlight unit providing light to the liquid crystal panel; and
an inverter connected to the second connector, the inverter receiving a backlight on/off signal and a dimming signal, which are output from the timing controller through the second connector, and controlling on/off and luminance of the backlight unit.

16. The liquid crystal display of claim 13, further comprising a handling module connected to the second connector, the handling module generating a user command signal according to a user's handling, and transmitting the user command signal to the timing controller through the second connector.

17. The liquid crystal display of claim 13, further comprising a mode indicator connected to the second connector, the mode indicator receiving a power saving mode signal, which is output from the timing controller through the second connector, and indicating that the liquid crystal display is in a power saving mode.

18. The liquid crystal display of claim 13, further comprising a data output terminal connected to the second connector, the data output terminal receiving the data signal processed by the timing controller through the second connector, and outputting the data signal to an external destination.

19. The liquid crystal display of claim 13, further comprising a universal serial bus output terminal connected to the second connector, the universal serial bus output terminal receiving a universal serial bus signal from the timing controller through the second connector, and outputting the universal serial bus signal to an external destination.

20. The liquid crystal display of claim 13, further comprising a backlight unit providing light to the liquid crystal panel, wherein the power supply module does not apply the power supply voltage to the backlight unit when the power supply module receives a power saving mode signal, which is output from the timing controller through the second connector.

21. The liquid crystal display of claim 13, wherein the second connector is connected to a plurality of modules, and the plurality of modules interface with the timing controller through the second connector.

22. A circuit board comprising:
a first connector delivering a data signal;
a second connector separated from the first connector and delivering a power supply voltage; and
a timing controller coupled to the first and second connectors, the timing controller receiving the power supply voltage from the second connector and the data signal from the first connector, and processing the data signal received from the first connector.

23. The circuit board of claim 22, wherein the first connector does not deliver the power supply voltage.

24. The circuit board of claim 22, wherein the first connector is connected to a transmission cable comprising a main link which transmits the data signal and an auxiliary channel which transmits a control signal to the timing controller, the data signal comprises an image data signal and an audio data signal, and the control signal comprises a monitor control command set.

25. The circuit board of claim 22, wherein the second connector is connected to a power supply module providing the power supply voltage, an inverter controlling on/off and luminance of a backlight unit, a handling module generating a user command signal according to a user's handling, and a mode indicator indicating whether the liquid crystal display is in a power saving mode.
